Europäisches Patentamt

European Patent Office

Office européen des brevets

(11) Numéro de publication : **0 041 014**
**B1**

(12) **FASCICULE DE BREVET EUROPÉEN**

(45) Date de publication du fascicule du brevet :
20.02.85

(51) Int. Cl.⁴ : **G 21 C   3/32**

(21) Numéro de dépôt : **81400794.4**

(22) Date de dépôt : **20.05.81**

(54) **Dispositif de fixation d'un tube de guidage d'un assemblage combustible nucléaire aux plaques d'extrémités dudit assemblage.**

(30) Priorité : **27.05.80 FR 8011695**

(43) Date de publication de la demande :
**02.12.81 Bulletin 81/48**

(45) Mention de la délivrance du brevet :
**20.02.85 Bulletin 85/08**

(84) Etats contractants désignés :
**BE DE GB IT NL SE**

(56) Documents cités :
**FR-A- 2 070 194**
**FR-A- 2 420 826**
**US-A- 3 971 575**
**US-A- 4 030 975**
**US-A- 4 166 313**

(73) Titulaire : **COMMISSARIAT A L'ENERGIE ATOMIQUE Etablissement de Caractère Scientifique Technique et Industriel**
**B.P. 510**
**F-75752 Paris Cedex 15 (FR)**

(72) Inventeur : **Feutrel, Claude**
**105, Grande Rue**
**F-91430 Vauhallan (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

## Description

La présente invention se rapporte aux assemblages combustibles de réacteurs nucléaires par exemple du type refroidi par eau ordinaire sous pression, dans lesquels le combustible proprement dit, réparti en un grand nombre de crayons unitaires, est groupé en des faisceaux autonomes constituant chacun un assemblage de combustible. Un tel assemblage comporte de façon connue et schématiquement deux plaques d'extrémité inférieure et supérieure réunies entre elles par des tubes guides creux pouvant servir notamment à l'introduction de barres de commande ou de dispositifs de mesure. Sur ces différents tubes guides sont maintenues généralement des grilles d'espacement pouvant parfois coulisser librement autour desdits tubes guides et dans lesquelles sont fixés, à l'aide de systèmes à ressort, les crayons combustibles unitaires.

D'une manière courante également, les plaques d'extrémité sont en acier inoxydable et les tubes guides sont en alliage zircaloy perméable au flux de neutrons qui les traverse.

En raison de l'impossibilité pratique de souder le zircaloy sur l'acier inoxydable, on a réalisé jusqu'à ce jour les fixations des tubes guides sur les plaques d'extrémité en acier inoxydable principalement à l'aide de systèmes d'emmanchement à force possédant des ondulations destinées à éviter le glissement longitudinal du tube dans son support. Toutefois, les dispositions de ce genre résistent très mal aux dilatations différentielles entre les différents éléments de la liaison lorsque le réacteur monte en température ; ces dilatations amènent presque infailliblement des déformations, aussi bien diamétrales que longitudinales, qui finissent par compromettre la qualité de la liaison au bout d'un temps relativement court de fonctionnement.

Le brevet européen EP-A-0 021 912 déposé le 3 juin 1980 et publié le 7 janvier 1981 a pour objet un procédé et un dispositif de fixation d'un tel tube de guidage sur la plaque d'extrémité d'un assemblage combustible nucléaire qui permet d'assurer une jonction durable et solide à l'aide de moyens particulièrement simples et de mise en œuvre facile.

Le dispositif objet dudit brevet EP-A-0 021 912 se caractérise en ce qu'il comprend :
— un manchon muni de deux épaulements externes ;
— une virole montée en force sur ledit manchon, soudée à celui-ci et enserrant l'extrémité expansée du tube de guidage emboîtée sur ledit manchon jusqu'au premier épaulement externe ;
— un orifice de la plaque d'extrémité muni d'un épaulement dans lequel est logé ledit manchon dont le deuxième épaulement vient en butée sur l'épaulement de la plaque supérieure, l'extrémité supérieure dudit manchon étant fixée à la partie supérieure de l'orifice de la plaque d'extrémité de l'assemblage.

Ainsi qu'on le voit, le dispositif objet de ce brevet EP-A-0 021 912 réalise une liaison du tube de guidage en zircaloy sur la plaque d'extrémité de l'assemblage en acier inox en évitant toute dilatation différentielle entre les éléments de la liaison tant au point de vue de la déformation diamétrale que de la déformation dans le sens longitudinal, du fait même que les différents composants de la liaison sont montés en butée les uns contre les autres et que des soudures assurent leur fixation définitive.

La liaison ainsi réalisée a donné toute satisfaction et fonctionne parfaitement. Toutefois, son principe même exclut toute possibilité d'un démontage si l'on veut par exemple, lors d'une opération d'entretien d'un assemblage combustible, démonter la plaque d'extrémité supérieure pour remplacer un ou plusieurs crayons de combustible qui seraient devenus défectueux. De plus, une telle opération devant se faire nécessairement dans une piscine de protection contre les rayonnements, c'est-à-dire au travers d'une couche d'eau de plusieurs mètres de profondeur, les problèmes techniques que pose le démontage d'un tube guide sont relativement complexes et n'ont pas reçu de solution satisfaisante à ce jour.

D'autres solutions de liaison tubes guides-plaques d'extrémité par vissage ont été envisagés (notamment celle qui décrit l'US-A-4 030 975) mais non appliquées, en raison notamment de leur complexité et de leur difficulté de démontage à distance.

La présente invention a précisément pour objet un dispositif de fixation d'un tel tube de guidage de façon démontable à la plaque d'extrémité de cet assemblage, et ce par des moyens assurant la robustesse de la fixation et la fiabilité totale des opérations de fixation et de démontage.

Dans la présente invention, ce dispositif de fixation d'un tube de guidage en zircaloy d'un assemblage combustible de réacteur nucléaire du type à eau ordinaire sous pression à la plaque d'extrémité en acier dudit assemblage, se caractérise en ce qu'il comprend :
— une bague-écrou comportant deux filetages de pas opposé, à savoir un premier filetage inférieur coopérant avec la partie supérieure taraudée du manchon et assurant la fixation de ce dernier en translation par serrage entre deux épaulements et un deuxième filetage supérieur coopérant avec un embout taraudé monté à l'extrémité d'une perche permettant sa manœuvre à distance ;
— un fourreau-tournevis à crans, solidaire en rotation de ladite perche, mais mobile en translation, par l'intermédiaire d'un système de rappel élastique, le long de ladite perche, entre une première position basse pour laquelle des crans portés par ledit fourreau tournevis sont logés dans des évidements de la partie supérieure de la bague qu'ils solidarisent ainsi en rotation avec la perche et l'embout et une deuxième position haute pour laquelle lesdits crans sont dégagés des évidements précédents et où la bague et l'embout sont indépendants l'un de l'autre en rotation ;

— des moyens pour freiner la rotation de la bague par rapport au manchon ;

— des moyens pour empêcher toute rotation du manchon et du tube guide par rapport à la plaque d'extrémité supérieure lors des opérations de fixation et de démontage..

Selon la présente invention, le dispositif de fixation comporte essentiellement une bague-écrou comportant deux filetages de pas inverses. Le tube guide est enserré, comme dans le brevet EP-A0 021 912, entre un manchon interne et une virole externe. La partie supérieure du manchon comporte un taraudage sur lequel vient se visser la bague-écrou et le manchon est ainsi fixé par serrage entre deux épaulements sur la plaque d'extrémité supérieure lorsque la bague-écrou est vissée à fond. Selon l'invention, cette bague-écrou est d'abord vissée par son deuxième filetage supérieur sur l'embout taraudé d'une perche de manipulation de l'ensemble depuis l'extérieur au-dessus de la piscine de stockage de l'assemblage.

Le vissage de la bague-écrou intervient ensuite sur la partie supérieure taraudée du manchon à l'aide de crans portés par un fourreau-tournevis lié en rotation à la perche et mobile en translation le long de celle-ci, lesdits crans venant se loger dans des évidements de la partie supérieure de la bague-écrou. Lorsque cette bague écrou est totalement vissée, il suffit alors de désolidariser les crans du fourreau-tournevis des évidements de la bague-écrou pour que, tout en continuant à tourner la perche dans le même sens, l'embout taraudé qu'elle porte se dévisse de la partie supérieure de la bague-écrou puisque le deuxième filetage supérieur de celle-ci est en sens inverse du premier filetage inférieur.

Selon la présente invention, il est utile pour freiner la rotation de la bague-écrou et éviter par exemple qu'elle ne soit entraînée à contre-sens par l'embout de la perche, de prévoir des moyens pour freiner sa rotation vis-à-vis du manchon. Divers moyens connus peuvent être utilisés à cet effet.

Dans un mode de mise en œuvre particulièrement simple de l'invention, on réalise ces moyens de freinage par une semi-bague curviligne posée déformée, limitée par une fente transversale pratiquée dans le premier filetage de la bague-écrou.

Dans un autre mode de mise en œuvre, les moyens pour freiner la rotation de la bague-écrou vis-à-vis du manchon, consistent en une empreinte usinée sur la bague-écrou et destinée à recevoir une déformation correspondante de la plaque d'extrémité.

Il est également nécessaire d'interdire toute rotation du manchon par rapport à la plaque d'extrémité supérieure lors des opérations de fixation et de démontage de celui-ci.

Dans un premier mode de mise en œuvre de l'invention, ces moyens pour empêcher la rotation du manchon par rapport à la plaque d'extrémité supérieure consistent en des cannelures taillées sur la périphérie externe du manchon et coopérant avec un logement cannelé complémentaire usiné à la surface en regard de la plaque d'extrémité supérieure.

Dans un deuxième mode de mise en œuvre, ces mêmes moyens consistent en des ergots portés par la surface d'un mandrin cylindrique maintenu immobile en rotation et logé dans l'évidement central de la perche constituée à cet effet d'un cylindre creux, lesdits ergots coopérant avec des rainures taillées sur la surface interne dudit manchon.

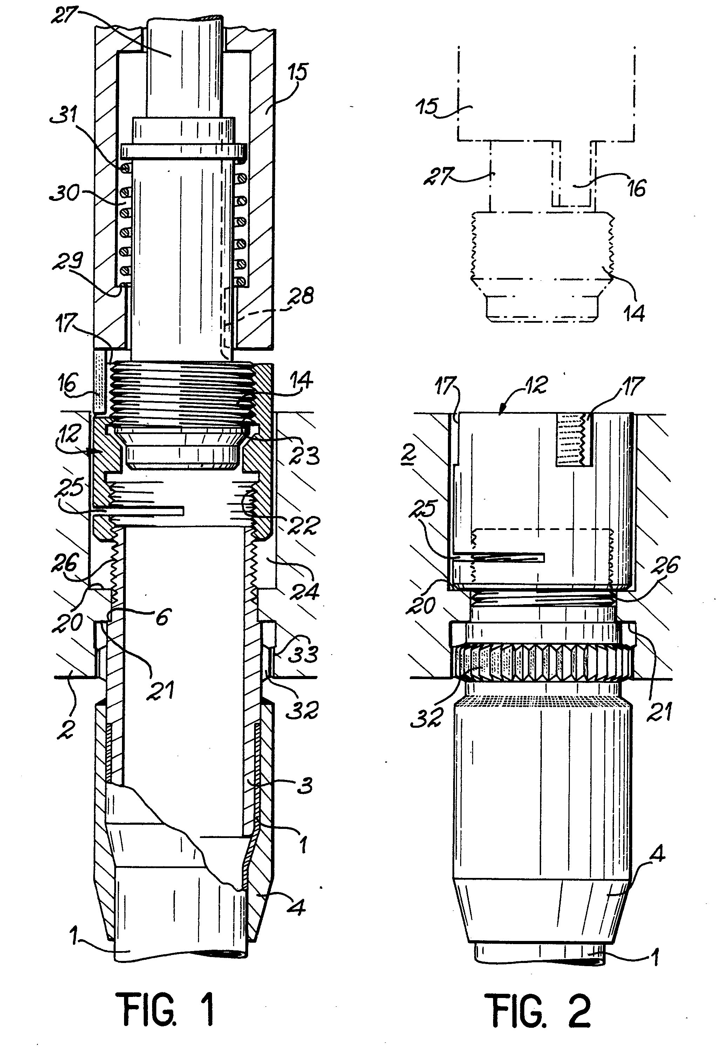

De toute façon, l'invention sera mieux comprise à la lecture qui suit de la description de deux modes de mise en œuvre du dispositif de fixation d'un tube de guidage d'un assemblage combustible à la plaque d'extrémité de cet assemblage. Cette description qui sera faite surtout à titre illustratif et non limitatif, se réfèrera aux figures 1 à 4 ci-jointes sur lesquelles :

la figure 1 représente en coupe selon l'axe d'un tube guide, l'introduction de la bague écrou et la fixation de ce tube guide, dans un premier mode de mise en œuvre de l'invention ;

la figure 2 représente, dans le mode de réalisation de la figure 1, d'une part, la bague-écrou entièrement vissée, et d'autre part, la perche, le tournevis et l'embout qui viennent de se désolidariser de la plaque d'extrémité de l'assemblage ;

la figure 3 représente l'opération de fixation d'un tube guide sur la plaque d'extrémité dans un deuxième mode de mise en œuvre de l'invention ;

la figure 4 représente le dispositif de la figure 3 dans lequel la bague-écrou est complètement vissée ; on y voit également la perche, le fourreau-tournevis et l'embout taraudé dans la position où ils viennent de se désolidariser de l'ensemble précédent après vissage de la bague-écrou.

Sur toutes les figures précédentes, on doit imaginer, bien que ceci pour des raisons de simplification ne soient pas explicitement représentées sur les dessins, que les dispositifs représentés fonctionnent dans l'eau d'une piscine et son manœuvrés, à une distance de plusieurs mètres, uniquement à l'aide de la perche représentée à la partie supérieure des figures.

Sur la figure 1, on voit le tube guide 1 enserré à la partie supérieure entre une virole en acier inoxydable 4 et un manchon également en acier inoxydable 3.

La plaque d'extrémité supérieure 2 possède deux épaulements, respectivement 20 à la partie supérieure et 21 à la partie inférieure, l'épaulement 21 coopérant avec l'épaulement supérieur 6 du manchon 3.

On voit également sur la figure, la bague-écrou 12 comportant un premier filetage inférieur 22 et un deuxième filetage 23, les filetages 22 et 23 étant, selon l'invention, de pas opposés. Un logement 24 creusé dans la partie supérieure de la plaque d'extrémité 2 permet le passage de la bague-écrou 12. Celle-ci présente encore une semi-bague curviligne posée déformée, limitée par une fente transversale 25 destinée à créer un certain frottement sur les filets de la partie supérieure taraudée 26 du manchon 3 pour freiner la rotation de la bague-écrou 12 par rapport à ce même manchon 3.

Le deuxième filetage supérieur 23 de la bague-écrou 12 coopère avec l'embout taraudé 14 monté à l'extrémité de la perche 27 à l'aide de laquelle, depuis la surface de la piscine non représentée, on manœuvre l'ensemble du dispositif.

La bague-écrou 12 comporte encore à sa périphérie supérieure un certain nombre d'évidements 17 destinés à coopérer avec des crans 16 portés par la base d'un fourreau-tournevis 15 situé autour de la partie inférieure de la perche 27 et mobile le long de celle-ci uniquement en translation grâce à un clavetage 28 qui solidarise le fourreau-tournevis 15 en rotation avec la perche 27. A la partie inférieure de la perche 27, le fourreau-tournevis 15 comporte un épaulement 29 délimitant un logement 30 entre la paroi de la perche 27 et le fourreau-tournevis 15 dans lequel est logé un ressort 31 ayant pour but normalement, c'est-à-dire lorsque l'expérimentateur à la surface n'exerce pas sur le tournevis-fourreau 15 une action antagoniste tendant à comprimer le ressort 31, de faire pénétrer les crans 16 dans les évidements 17 de la bague-écrou 12 et de rendre ainsi solidaires en rotation la bague-écrou 12 et la perche 27. Dans l'exemple décrit, les crans 16 et les évidements 17 sont au nombre de trois répartis à 120° autour de l'axe du système.

Dans le mode de mise en œuvre des figures 1, 2 le manchon 3 possède encore un certain nombre de crans 32 situés à la périphérie d'une zone annulaire de ce manchon 3 et coopérant avec un logement cannelé complémentaire 33 de la plaque d'extrémité 2. Les crans de la cannelure 32 pénètrent dans les parties creuses du logement cannelé complémentaire 33 interdisant ainsi toute rotation du manchon 3 et par conséquent du tube-guide 1 par rapport à la plaque d'extrémité 2, lors des opérations de montage et de démontage du dispositif. Ceci est évidemment rendu nécessaire par le fait que les opérations précédentes ayant lieu sous l'effet de rotations dans un sens ou dans un autre de la bague-écrou 12, il est indispensable que le tube-guide 1 soit fixé en rotation par rapport à la plaque d'extrémité 2.

Le fonctionnement du dispositif de la figure 1 est alors le suivant. Si l'on veut, par exemple, fixer le tube guide 1 et son manchon 3 à la plaque d'extrémité supérieure 2 à l'aide de la bague 12, on s'y prend de la façon suivante. L'opérateur commence d'abord, à l'extérieur de la piscine de protection, par fixer la bague-écrou 12 à l'extrémité de la perche 27 en vissant le deuxième filetage supérieur 22 sur l'embout 14 de cette perche 27. Pour faire cette opération, l'opérateur est évidemment contraint, d'abord, de soulever le tournevis-fourreau 15 vers le haut de façon à ce que les crans 16 libèrent la surface extérieure du filetage 23 de l'embout 14. Cette opération étant effectuée, l'opérateur libère le tournevis-fourreau 15 et sous l'effet du ressort 31 qui se détend, les crans 16 pénètrent alors dans les évidements correspondants 17 de la partie supérieure de la bague-écrou 12. L'ensemble ainsi préparé est descendu dans la piscine et la bague-écrou 12 commence à être vissée par son premier filetage inférieur 22 le long de la partie supérieure taraudée 26 du manchon 3. L'opérateur continue à tourner la perche 27 toujours dans le même sens jusqu'à ce que la bague-écrou 12 vienne buter contre l'épaulement supérieur 20 de la plaque d'extrémité supérieure 2. A ce moment, l'opérateur agit à nouveau sur le tournevis-fourreau 15 dont il comprime le ressort pour dégager les crans 16 des évidements 17, ce qui désolidarise la perche 27 et son embout 14 de la bague 12. Comme le deuxième filetage supérieur 23 de la bague-écrou 12 est de pas inverse du premier filetage inférieur 22, l'opérateur dévisse l'embout 14 de la bague-écrou 12 en continuant à tourner dans le même sens.

On parvient alors à la position de la figure 2 où la bague-écrou 12 totalement vissée dans son logement maintient le tube guide 1 et son manchon 3 serrés sur les deux épaulements 20 et 21 de la plaque d'extrémité 2 ; la perche 27 et le fourreau-tournevis 15 à crans 16 sont alors désolidarisés et l'ensemble, ainsi que l'embout taraudé 14, peuvent être remontés à la surface.

Les différentes manœuvres qui viennent d'être expliquées à propos du vissage de la bague-écrou 12 sur le manchon 3 dans le logement 24 sont parfaitement reproductibles de façon inverse lorsqu'on veut, au contraire, effectuer le démontage de l'ensemble par dévissage de la plaque-écrou 12. L'Homme de l'Art pouvant sans difficulté reconstituer ce cheminement inverse et la suite des opérations nécessaires à ce démontage, à l'aide de la perche 27 et de son embout taraudé 14, on ne décrira pas plus en détail une telle opération.

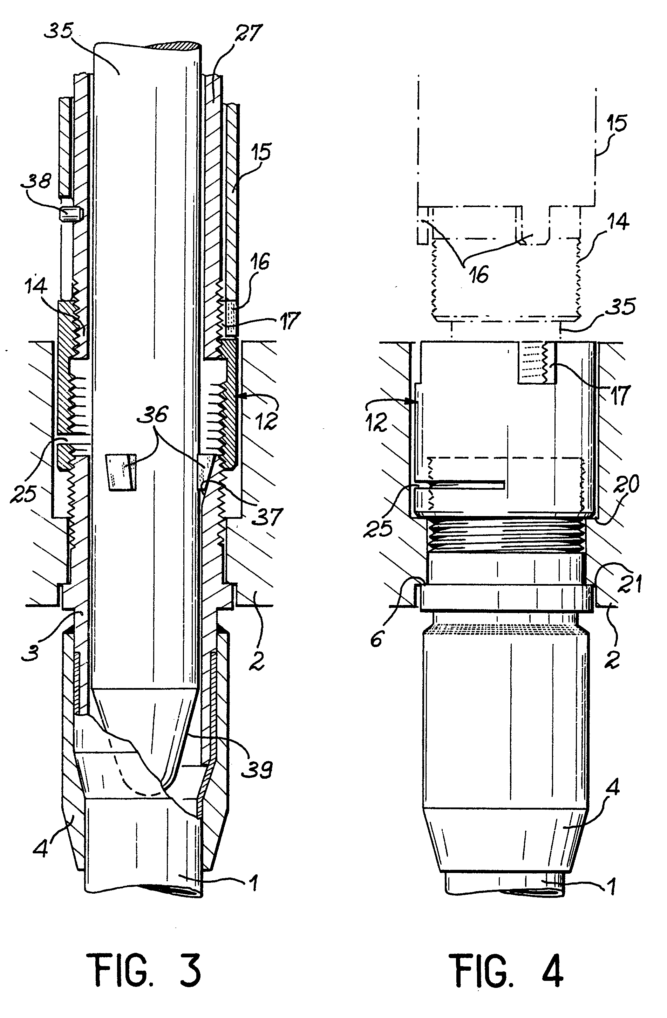

En se référant maintenant aux figures 3 et 4, on va décrire une variante du dispositif précédent, caractérisée essentiellement par le fait que l'interdiction de rotation du manchon 3 est due cette fois non plus à des crantages complémentaires du manchon 3 et de la plaque d'extrémité 2, mais à un mandrin 35, immobilisé en rotation depuis la surface par l'opérateur, et comportant des ergots périphériques 36 logés dans des rainures correspondantes 37 taillées dans la surface interne de la partie supérieure du manchon 3. Ce mandrin occupe une position centrale selon l'axe du tube guide 1 et impose de ce fait une constitution tubulaire cylindrique creuse pour la perche 27 à l'intérieur de laquelle il se déplace en translation.

On retrouve sur la figure 3, les éléments correspondants des figures 1 et 2 portant les mêmes nombres de référence et en particulier le fourreau 15 muni d'un téton de clavetage 38 pour solidariser en rotation le fourreau 15 et la perche 27.

Selon l'invention, le mandrin 35 est introduit et/ou retiré en même temps que la perche 27 et il possède un embout de centrage 39 qui permet de faciliter son positionnement lors de l'introduction de cette perche 27 dans le dispositif en vue d'une opération de montage ou de démontage.

## Revendications

1. Dispositif de fixation démontable d'un tube de guidage (1) en zircaloy d'un assemblage combustible de réacteur nucléaire du type à eau ordinaire sous pression à la plaque d'extrémité en acier (2) dudit assemblage à l'aide d'un manchon (3) et d'une virole externe (4), caractérisé en ce qu'il comprend :
— une bague-écrou (12) comportant deux filetages de pas opposés, à savoir un premier filetage inférieur (22) coopérant avec la partie supérieure taraudée (26) du manchon (3) et assurant la fixation de ce dernier en translation par serrage entre deux épaulements (20, 21) et un deuxième filetage supérieur (23) coopérant avec un embout taraudé (14) monté à l'extrémité d'une perche (27) permettant sa manœuvre à distance ;
— un fourreau-tournevis (15) à crans (16), solidaire en rotation de ladite perche (27), mais mobile en translation, par l'intermédiaire d'un système de rappel élastique (31), le long de ladite perche, entre une première position basse pour laquelle des crans (16) portés par ledit fourreau-tournevis (15) sont logés dans des évidements (17) de la partie supérieure de la bague-écrou (12) qu'ils solidarisent ainsi en rotation avec la perche (27) et l'embout (14) et une deuxième position haute pour laquelle lesdits crans (16) sont dégagés des évidements (17) précédents et où la bague (12) et l'embout (14) sont indépendants l'un de l'autre en rotation ;
— des moyens (25) pour freiner la rotation de la bague (12) par rapport au manchon (3) ;
— des moyens (32, 33) pour empêcher toute rotation du manchon (3) et du tube guide (1) par rapport à la plaque d'extrémité supérieure (2) lors des opérations de fixation et de démontage.

2. Dispositif selon la revendication 1, caractérisé en ce que les moyens pour freiner la rotation de la bague-écrou (12) par rapport au manchon (3) sont constitués par une semi-bague curviligne posée déformée, limitée par une fente transversale (25) pratiquée dans le premier filetage (22) de ladite bague-écrou (12).

3. Dispositif selon la revendication 1, caractérisé en ce que les moyens pour freiner la rotation de la bague-écrou (12) par rapport au manchon (3) sont constitués par une empreinte usinée sur ladite bague-écrou (12) et destinée à recevoir une déformation correspondante de la plaque d'extrémité (2).

4. Dispositif selon l'une quelconque des revendications 1 à 3, caractérisé en ce que les moyens pour empêcher toute rotation du manchon (3) par rapport à la plaque d'extrémité supérieure (2) consistent en des cannelures (32) taillées sur la périphérie externe du manchon (3) et coopérant avec un logement cannelé complémentaire (33) usiné à la surface en regard de la plaque d'extrémité supérieure (2).

5. Dispositif selon l'une quelconque des revendications 1 à 3, caractérisé en ce que les moyens pour empêcher toute rotation du manchon (3) par rapport à la plaque d'extrémité supérieure (2) consistent en des ergots (36), portés par la surface d'un mandrin cylindrique (35) maintenu immobile en rotation et logé dans l'évidement central de la perche (27) constituée à cet effet d'un cylindre creux, lesdits ergots (36) coopérant avec des rainures (37) taillées sur la surface interne dudit manchon (3).

## Claims

1. Demountable device for fixing a zircaloy guide tube (1) of a nuclear reactor fuel assembly of the ordinary pressurised water type to the steel end plate (2) of the said assembly by means of a sleeve (3) and an external sleeve (4), characterised in that it comprises :
— a ring nut (12) comprising two screwthreads of opposite pitch, in other words a first lower screwthread (22) co-operating with the threaded upper part (26) of the sleeve (3) an ensuring fixing of this latter in a translatory movement by clamping between two shoulders (20, 21) and a second upper screwthread (23) co-operating with a threaded socket (14) mounted on the end of a rod (27) which makes it possible to be remotely operated ;
— a screwdriver liner (15) with faces (16), rotationally rigid with the said rod (27) but capable of a translatory movement, by means of an elastic restoring system (31), along the said rod, between a first low position in which the faces (16) carried by the said screwdriver liner (15) are housed in recesses (17) in the upper part of the ring nut (12) which they thus make rotationally rigid with the rod (27) and the socket (14) and a second high position in which the said faces (16) are clear of the aforesaid recesses (17) and in which the ring (12) and the socket (14) are independent of each other in rotation ;
— means (25) of braking rotation of the ring (12) in relation to the sleeve (3) ;
— means (32, 33) of preventing any rotation of the sleeve (3) and of the guide tube (1) in relation to the upper end plate (2) during fixing and dismantling operations.

2. Device according to Claim 1, characterised in that the means of braking rotation of the ring nut (12) in relation to the sleeve (3) consist of a curvilinear semi-ring positioned in a deformed state, defined by a transverse slot (25) made in the first screwthread (22) in the said ring nut (12).

3. Device according to Claim 1, characterised in that the means of braking rotation of the ring nut (12) in relation to the sleeve (2) consist of an impression machined into the said ring nut (12) and intended to receive a corresponding deformation of the end plate (2).

4. Device according to any one of Claims 1 to 3, characterised in that the means of preventing any rotation of the sleeve (3) in respect of the upper end plate (2) consist in channels (32) cut into the outer periphery of the sleeve (3) and co-operating with a complementary channelled housing (33) machined into the surface opposite the upper end plate (2).

5. Device according to any one of Claims 1 to 3, characterised in that the means of preventing any rotation of the sleeve (3) in relation to the upper end plate (2) consist of studs (36) carried by the surface of a cylindrical shell (35) maintained immovable in a rotary sense and housed in the central recess in the rod (27) consisting, for this purpose, of a hollow cylinder, the said studs (36) co-operating with grooves (37) cut into the inner surface of the said sleeve (3).

**Ansprüche**

1. Lösbare Befestigungseinrichtung für ein Führungsrohr (1) aus Zirkoniumlegierung eines Brennelementenbündels bei einem mit normalen Wasser unter Druck betriebenen Kernreaktor auf die aus Stahl bestehende Endplatte (2) dieses Bündels mit Hilfe einer Hülse (3) und eines äußeren Ringes (4), dadurch gekennzeichnet, daß die Einrichtung umfaßt :

— einen zwei Gewinde mit entgegengesetzter Steigung aufweisenden Schraubring (12), wobei ein erstes, unteres Gewinde (22) mit dem oberen, mit einem Gewinde (26) versehenen Abschnitt der Hülse (3) zusammenarbeitet und die Befestigung letzterer in Verschieberichtung durch Einspannen zwischen zwei Schultern (20, 21) sicherstellt, und ein zweites, oberes Gewinde (23) mit einem mit einem Gewinde (14) versehenen Ansatz zusammenarbeitet, der an dem Ende einer Stange (27) befestigt ist und dessen Fernbetätigung erlaubt,

— einen mit Vorsprüngen (16) ausgebildeten, hülsenförmigen Schraubendreher (15), der an der Stange (27) drehfest befestigt ist, jedoch mittels eines elastischen Rückführsytems (31) längs der Stange verschiebbar ist zwischen einer ersten, unteren Stellung, in der die der hülsenförmige Schraubendreher (15) aufweisenden Vorsprünge in Ausnehmungen (17) des oberen Abschnittes des Schraubenringes (12) angeordnet sind, die sich somit drehfest mit der Stange (27) und dem Ansatz (14) verbinden, und einer zweiten oberen Stellung, in der die Vorsprünge (16) von den Vorhergehenden Ausnehmungen (17) frei sind und der Ring (12) und der Ansatz (14) drehmäßig voneinander unabhängig sind,

— Mittel (25), um die Drehung des Ringes (12) in Bezug auf die Hülse (3) zu bremsen,

— Mittel (32, 33), um jegliche Drehung der Hülse (3) und des Führungsrohres in Bezug auf die obere Endplatte beim Befestigungs- oder Entfernungsvorgang zu verhindern.

2. Einrichtung nach Anspruch 1, dadurch gekennzeichnet, daß die Mittel zum Bremsen der Drehung des Schraubenringes (12) in Bezug auf die Hülse (3) von einem gekrümmten, verformt eingesetzten Halbring gebildet sind, welcher von einem in dem ersten Gewinde (22) des Schraubenringes (12) ausgebildeten Querschlitz (25) begrenzt ist.

3. Einrichtung nach Anspruch 1, dadurch gekennzeichnet, daß die Mittel zum Bremsen der Drehung des Schraubenringes (12) in Bezug auf die Hülse (3) von einer Vertiefung gebildet sind, die auf dem Schraubenring (12) hergestellt und bestimmt ist, eine entsprechende Verformung der Endplatte (2) aufzunehmen.

4. Einrichtung nach einem der Ansprüche 1 bis 3, dadurch gekennzeichnet, daß die Mittel zum Verhindern jeglicher Drehung der Hülse (3) in Bezug auf die obere Endplatte (2) aus auf dem Außenumfang der Hülse (3) eingeschnittenen Riefelungen (32) bestehen, die mit einer komplementären, gerillten Aufnahme (33) zusammenwirken, die an der gegenüberliegenden Oberfläche der oberen Endplatte (2) hergestellt ist.

5. Einrichtung nach Anspruch 1 bis 3, dadurch gekennzeichnet, daß die Mittel zum Verhindern jeglicher Drehung der Hülse (3) in Bezug auf die obere Endplatte (2) aus Vorsprüngen (36) bestehen, die die Oberfläche eines zylinderförmigen Bolzens (35) trägt, welcher drehfest gehalten und in der mittigen Ausnehmung der Stange (27) angeordnet ist, welche deshalb aus einem Hohlzylinder besteht, und daß die Vorsprünge (36) mit in die innere Oberfläche der Hülse (3) eingeschnittenen Nuten (37) zusammenwirken.

FIG. 1

FIG. 2

FIG. 3

FIG. 4

2